# EUROPÄISCHE PATENTSCHRIFT

(11) **EP 1 627 377 B1**
(45) Veröffentlichungstag und Bekanntmachung des Hinweises auf die Patenterteilung: **02.09.2020**
(21) Anmeldenummer: 04734823.0
(22) Anmeldetag: 26.05.2004
(51) Int. Cl.: G10K 11/168, B32B 5/26

(54) **SCHALLABSORBER**
SOUND ABSORBER
ISOLANT ACOUSTIQUE

(30) Priorität: 28.05.2003 DE 10324257; 29.12.2003 US 747763
(43) Veröffentlichungstag der Anmeldung: 22.02.2006
(73) Patentinhaber: Adler Pelzer Holding GmbH, 58099 Hagen (DE)
(72) Erfinder: KELLER, Hans-Peter, CH-5034 Suhr (CH); SCHNEIDER, Marco, 44289 Dortmund (DE); DÖHRING, Olaf, 44137 Dortmund (DE); MORRIS-KIRBY, Rod, Warwickshire CV227DH (GB); NICOLAI, Norbert, 46514 Schermbeck (DE); DORIS, Colm, Waterford (IE)
(74) Vertreter: dompatent von Kreisler Selting Werner - Partnerschaft von Patent- und Rechtsanwälten mbB
(86) Internationale Anmeldenummer: PCT/EP2004/005652
(87) Internationale Veröffentlichungsnummer: WO 2004/107314

(56) Entgegenhaltungen:
- WO-A-98/18657
- DE-A- 3 601 204
- DE-A- 10 143 167
- US-A- 4 131 664
- US-A- 4 283 457
- US-A1- 2003 066 708

## Beschreibung

Gegenstand der Erfindung sind Schallabsorber für Kraftfahrzeuge aus zwei miteinander verbundenen thermoplastisch und/oder duroplastisch gebundenen Textilfaservliesen.

Im Motorraum moderner Fahrzeuge, sowohl bei PKW- als auch im NFZ-Bereich, werden in zunehmendem Maße Schallisolationsteile in Form von Absorbern zur Reduktion von Motorgeräuschen eingesetzt. Diese vorwiegend als Formteile konzipierten Absorber haben Einfluss auf das Außen- und Innengeräusch der Fahrzeuge. Die heute vorwiegend eingesetzten Formteile aus Faservliesstoffen (z.B. aus Baumwolle) oder auch aus PU-Schaum weisen typischerweise Wärmeformbeständigkeiten bis ca. 160°C auf. Bei höheren Wärmebelastungen werden diese Formteile auf der der Wärmequelle zugewandten Oberfläche partiell oder vollständig mit Aluminiumfolien als Hitzereflektor kaschiert, um die dahinterliegenden Faservliesstoffe zu schützen.

US-A-4 131 664 beschreibt eine verbesserte Akustikplatte für Akustik, die für die Verwendung in den Innenräumen von Fahrgasträumen und Außenteilen von Kraftfahrzeugen oder dergleichen geeignet ist, die mehrere Faserschichten mit unterschiedlicher Dichte aufweist, die an ihren Schnittstellen einstückig miteinander verbunden sind und gegebenenfalls mit einem dekorativen Finish versehen sind. Die Schrift ist ferner auf neuartige Verfahren zur Herstellung solcher Verkleidungsplatten gerichtet, die vorgewählte Konturen und lokalisierte Prägungen enthalten, um sich an die Kontur der Strukturverkleidungen von Fahrzeugkarosserien anzupassen, über die die Verkleidungsplatten montiert werden können. Gemäß einer Ausführungsform des Verfahrens wird ein Faserkissen gebildet, das geeignete Bindemittel und eine koextensive undurchlässige Membran oder einen Film enthält, der zwischen den Stirnflächen davon angeordnet ist. Das Verbundkissen wird in eine entsprechend konturierte Form gebracht, und pneumatischer Druck wird auf eine Seite davon ausgeübt, um eine Verdichtung und Formung der zwischen der Membran und der Formoberfläche angeordneten Faserlage zu bewirken, ohne die gegenüberliegende Faserschicht merklich zu verdichten, während gleichzeitig die Lage eingestellt wird.

WO 98/18657 A betrifft einen Bausatz zur Geräuschminderung in Kraftfahrzeugen und umfasst mindestens ein flaches Fahrzeugteil mit einer aus mehreren Schichten bestehenden schallisolierenden Baugruppe und einer zumindest teilweise ineinandergreifenden Luftschicht. Diese Baugruppe hat mindestens eine poröse Polsterschicht, eine mikroporöse Verstärkungsschicht, die leicht, steif und offenporig ist und einen Luftströmungswiderstand zwischen Rt = 500Nsm-3 und Rt = 2.500Nsm-3 und eine Oberfläche von mF = 0,3 kg / m² bis mF = 2,0 kg /m². Die Verstärkungsschicht hat eine Steifheit von B = 0,05 Nm bis B = 10,5 Nm. Dadurch kann das Gewicht klassischer Feder-Masse-Systeme zur Geräuschreduzierung in Fahrzeugen mit einem um mindestens 50% leichteren System ersetzt werden. Neben dem Dämpfungseffekt bei Schwingungen absorbiert dieses Kit auch Schall recht effektiv und bietet eine Wärmeisolierung. Vorzugsweise wird dieses multifunktionale ultraleichte Set zur Isolierung des Fußbodens oder der Stirnwand oder als Türverkleidung oder Dachinnenverkleidung verwendet.

In US 2003/066708 A1 werden schalldämpfende Verbundartikel und Verfahren zur Herstellung derselben bereitgestellt. Ein schalldämpfender Verbundgegenstand umfasst eine erste, zweite und/oder dritte und/oder vierte Materialschicht. Die erste Materialschicht kann entweder eine Akustikfasermatte und/oder ein Akustikschaummaterial sein und kann ein elastisches oder unelastisches Material sein. Die zweite Materialschicht ist ein thermoplastisches Material, das mit einer Oberfläche der ersten Materialschicht verschmolzen ist. Die dritte Materialschicht ist ein thermoplastisches Material, das mit einer Oberfläche der zweiten Materialschicht verschmolzen ist. Die vierte Materialschicht ist eine gewebte oder nicht gewebte Mischung von Fasern, wie zum Beispiel Scrim-Material, die an einer Oberfläche der dritten Materialschicht befestigt ist. Ausgewählte Teile des schalldämpfenden Verbundartikels werden erhitzt und dann komprimiert (als "abgestimmt" bezeichnet), um eine akustische Impedanz aufzuweisen, die größer als eine akustische Impedanz benachbarter Teile ist.

Aus DE 36 01 204 A ist ein aus mehreren Vlieslagen bestehender Absorptionsformkörper bekannt, der für geräuschdämmende Verkleidungen für den Motorraum von Kraftfahrzeugen dienen kann. Der Absorptionsformkörper besteht aus einer motorseitigen Decklage aus Kunststoff-Fasern, aus einer anschließenden wärmeisolierenden und schallabsorbierenden Lage aus anorganischem, thermisch hochbelastbarem Fasermaterial und aus einer weiteren absorbierenden Lage organischer Fasern.

In DE 38 18 301 C ist ebenfalls ein geräuschdämmender Formkörper für den Motorraum von Kraftfahrzeugen beschrieben, bei dem anorganisches, thermisch hochbelastbares, durch ein Bindemittel gebundenes Fasermaterial motorseitig über ein melaminharzhaltiges Verbindungsmittel mit einem Kohlenstoff-Fasermaterial abgedeckt ist. Dieser Formkörper soll eine gute Geräuschdämmung besitzen und auch als thermische Isolierung bis in einen Temperaturbereich von etwa 500 °C anwendbar sein.

DE 42 11 409 A1 betrifft eine selbsttragende, wärme- und schalldämmende Verkleidung für Verbrennungsmotoren von Kraftfahrzeugen, die aus mehreren Lagen besteht, die unter Einwirkung von Druck und Wärme unter Ausbildung von Zonen definiert vorgegebener Verdichtung verpresst worden sind. Die Verkleidung besteht motorseitig aus einer stärkeren, wärmeisolierenden und schalldämmenden Lage aus einem anorganischen Fasermaterial, die mit einem Kohlenstoff-Fasermaterial abgedeckt ist. Eine stärkere, motorabgewandte Lage aus anorganischem Fasermaterial härtet zu einer selbsttragenden Trägerschicht aus. Diese Trägerschicht kann karosserieseitig mit einer Schicht aus einem Polyestervlies oder Polyacrylnitrilfasern abgedeckt sein.

Im Automobilbereich vielfach eingesetzt wird auch eine wärme- und schalldämmende Verkleidung auf der Basis von Melaminharzschäumen, auf die ein- oder beidseitig temperaturbeständige Deckschichten aufgebracht werden. Melaminharzschäume gelten nach DIN 4102 als schwerentflammbar und sind in ihrem Brandverhalten der Klasse B1 einzuordnen. Die Dauertemperaturbeständigkeit von -40 °C bis 150 °C und eine Dauertemperaturbelastbarkeit von 200°C für drei Wochen macht dieses Material besonders geeignet für die Herstellung von Verkleidungen für den Motorraum von Kraftfahrzeugen. Allerdings ist das Material außerordentlich teuer, so dass die Aufgabe der vorliegenden Erfindung darin besteht, in Bezug auf die Wärme- und Schalldämmung vergleichbare Verkleidungen für den Motorraum von Kraftfahrzeugen herzustellen, die jedoch gegenüber dem Stand der Technik eine deutliche Verringerung der Kosten beinhalten.

DE 198 21 532 A1 beschreibt wärme- und schalldämmende Verkleidungen (Schallabsorber) für den Motorraum von Kraftfahrzeugen, bestehend aus einer motorseitigen Deckschicht, einer damit in Kontakt befindlichen, akustisch isolierenden, bis 180°C dauertemperaturbeständigen, bei 200°C drei Wochen dauertemperaturbelastbaren, duroplastischen Schaumstoffschicht einer Dicke von weniger als 5 mm, einer damit in Kontakt befindlichen akustisch isolierenden Schicht aus Kunststoffschaum, Partikelverbundschaum oder Faservlies bestehend aus nativen oder synthetischen Fasern sowie deren Gemische, genadelt oder ungenadelt und einer damit in Kontakt befindlichen, der Motorseite abgewandten Deckschicht. Die Verkleidungsteile sind somit insbesondere geeignet, für die Verkleidung von Einbauteilen, Karosserieteilen oder dergleichen von Automobilen, hitzeabstrahlenden Maschinen und Aggregaten, insbesondere von schallabsorbierenden Elementen zum Schutz gegen zu hohe Wärmebelastungen durch Maschinenführungen, Katalysatorteile oder dergleichen, insbesondere im Motorraum von Kraftfahrzeugen.

Die Geometrie des Verkleidungsteils ist dabei abhängig von der Frontklappeninnenseite und den räumlichen Verhältnissen im Motorraum. Die Befestigung der Verkleidungsteile geschieht beispielsweise durch Einstecken in ein Lochbild im Frontklappeninnenbereich. Sie werden durch möglichst wenig Spreiznieten gehalten. Im Bereich der Stirnwände im Motorraum ist es möglich, Verkleidungsteile zwischen der Karosserie und dem Motoraggregat anzubringen, wobei vorzugsweise an der Karosserie mittels Grobgewindebolzen oder mit Druckknöpfen (bzw. Blechmuttern) die Verkleidungsteile befestigt werden. Die Verkleidungsteile dienen hier der Schallabsorption des Motorlärms.

Im Bereich des Radhauses im Motorraum befinden sich die Verkleidungsteile motorseitig im Luftsammelraum. Sie verhindern das Eindringen des Motorlärms in den Innenraum und werden vorzugsweise ebenfalls mit Grobgewindebolzen oder Druckknöpfen befestigt. Im Bereich der Stirnwand des Motorraums dienen die Verkleidungsteile beispielsweise zur Abdeckung des Rohbaus von Querträger-Stirnwand oder dem Scheibenspalt bis auf Höhe des Tunnels zum Abschluss der Bodenverkleidung. Gegebenenfalls enthalten die Verkleidungsteile Durchbrüche für Leitungen der Klimaanlage. Im Bereich des Tunnels außen können die Verkleidungsteile ebenfalls zwischen dem Getriebe oder dem Abgasstrang und dem Bodenblech eingesetzt werden. Auch hier ist es besonders bevorzugt, diese mit Grobgewindebolzen und/oder Druckknöpfen, beispielsweise Blechmuttern zu befestigen.

Beim Einsatz der Verkleidungsteile im Bereich der Reinluftwand oben, wird diese oben abgedeckt, und ist dann hier befestigt. Sie befindet sich dann oberhalb der linken oder rechten Stirnwand des Motorraums.

Ein Abfall der Festigkeit durch den Einfluss von Wärme im bestimmungsgemäßen Gebrauch unterhalb des Ausgangswertes ist nicht gegeben.

DE 41 14 140 A1 betrifft textile Flächengebilde, bei denen die Bindung der Fasern durch thermoplastische Polyamide erfolgt. Der Vorteil der textilen Flächengebilde liegt darin, dass diese nach Gebrauch für eine Wiederverwertung geeignet sind. Darüber hinaus werden bei der Herstellung der textilen Flächengebilde bisher in Kauf genommene Nachteile, zu beanstandende Gerüche und unerwünschte Zersetzungsprodukte ausgeschlossen.

DE 43 05 428 C1 beschreibt einen aus einem Flachvlies gebildeten Bodenbelag, der an seiner Unterseite Insel-artig und integral ausgebildete Noppen aufweist, welche aus einer Vielzahl von einzelnen Fasern bestehen. Auf seiner Oberseite weist der Bodenbelag vorzugsweise eine Struktur auf. Die Strukturen beider Seiten werden dabei mittels Nadelung ausgebildet. Beim Verlegen des Bodenbelags kommen die Noppen auf den Unterbelagsboden zum Liegen. Dadurch entsteht auf der Unterseite des Bodenbelags ein Kanalsystem, welches ein Abfließen von Wasser begünstigt. Ein solcher Maßen ausgebildeter Bodenbelag wird vorzugsweise im Freien, beispielsweise als Tennisplatzbelag, eingesetzt, wobei in die Vertiefungen auf der Oberseite Granulat eingebracht werden kann.

DE 44 44 030 A1 beschreibt einen Bodenbelag, insbesondere für Tennisplätze. Dieser besteht aus einem Teppichboden-artigen Basisbelag und einer auf diesen aufgebrachten, aus einzelnen, losen Partikeln bestehenden Rutsch-Bestreuung. Die Partikel der Rutsch-Bestreuung sind jeweils mit einer weitgehend definierten Querschnittsform und Länge aus Kunststoff extrudiert, wobei jeweils die Länge zumindest annähernd gleich einer etwa mittig über den Querschnitt verlaufenden Partikel-Breite beziehungsweise -Höhe ist.

DE 198 12 925 A1 beschreibt dreidimensionale, formstabile Formteile auf Basis von strukturierten Nadelvliesen. Die Nadelvliese aus thermoplastischen Fasern mit einer ersten Schicht aus einer Mischung von Polypropylen (PP)-Fasern und Polyethylen(PE)-Fasern und einer zweiten und gegebenenfalls weiteren Schichten aus einer Mischung von PP-Fasern und PE-Fasern wird aus Bikomponentenfasern hergestellt, bestehend aus einer Mischung aus PP und PE; oder aus einer Mischung dieser Bikomponentenfasern und PP-Fasern und/oder PE-Fasern, wobei die beiden Schichten sowohl durch Vernadelung als auch durch geschmolzene oder angeschmolzene Fasern beziehungsweise Faserteilen des PE-Anteils der beiden Schichten verfestigt und miteinander verbunden sind.

DE 44 28 613 A1 beschreibt einen Schall- und Wärmedämmstoff. Hier wird insbesondere beschrieben, durch die Kombination mehrerer Materialien und Schichtdicken auf Distanz fixiertem Aufbau, die Eigenschaftsbilder hochverdichteter Werkstoffe mit solchen biegeweicher, schallabsorbierender, volumiger und strömungsgünstiger Werkstoffe zu verbinden, um beiden Aufgaben weitgehendst gerecht zu werden. Dies wurde gelöst durch den Einsatz vorwiegend rezyklierter Faserstoffe, die aufgrund ihrer unterschiedlichsten Geometrien unregelmäßig in den Schichten künstliche, reflektierende und absorbierende Barrieren bilden und mit Füllstoffen in den Faserschichten, sowie durch mehrlagigen Aufbau unter Ausnutzung aller technischen Möglichkeiten der Vlies - und Faserlegetechnik - wie auch in Kombination mit nicht textilen Werkstoffen.

DE 44 22 585 C1 beschreibt ein luftschallabsorbierendes Formteil und ein Verfahren zu seiner Herstellung. Insbesondere beschrieben wird ein luftschallabsorbierendes Formteil, bestehend aus einem ersten und einem zweiten Halbzeug aus jeweils zumindest einer Vliesstofflage, wobei die Halbzeuge in Richtung des auftreffenden Luftschalls unter Bildung zumindest eines Hohlraums mit Abstand benachbart zu einander angeordnet sind, wobei die Halbzeuge einander in einer funktionstechnischen Reihenschaltung zugeordnet und aufeinander abgestützt sind und wobei das dem Luftschall abgewandte zweite Halbzeug einen größeren Strömungswiderstand aufweist als das dem Luftschall zugewandte erste Halbzeug. Der Strömungswiderstand des zweiten Halbzeugs ist 1,25 bis 5 Mal größer als der Strömungswiderstand des ersten Halbzeugs und das erste Halbzeug weist einen Strömungswiderstand von 40 bis 80 und das zweite Halbzeug einen Strömungswiderstand von 90 bis 150 kgs⁻¹m⁻² (Rayl) auf.

Dem vorgenannten Stand der Technik gemeinsam ist ein relativ enges Schallabsorptionsfrequenzspektrum, sofern der Schallabsorber aus mehreren miteinander verbundenen Textilfaservliesen besteht. Alternativ dazu sind Schallabsorber bekannt, die eine Schwerschicht aufweisen und somit nach dem Feder/Masse-Prinzip wirken. Diese Schallabsorber sind jedoch relativ schwer und die Schwerschicht, meist aus Ethylen-Vinylacetat-Copolymeren mit hohem Gehalt an Füllstoffen für ein Recycling wenig geeignet. Zwar ist die Schallabsorption im Bereich von 100 bis 500 Hz zufriedenstellend, im höherfrequenten Bereich jedoch absolut unzufriedenstellend.

Demgegenüber besteht die Aufgabe der vorliegenden Erfindung in der Verbesserung der Schallabsorption insbesondere in dem besonders interessanten Frequenzbereich von 200 bis 800 Hz.

Die vorgenannte Aufgabe wird gelöst durch einen Schallabsorber für ein Kraftfahrzeug bestehend aus zwei miteinander verbundenen thermoplastisch und/oder duroplastisch gebundenen Textilfaservliesen (1,2), mit einer Gesamtdicke des Schallabsorbers im Bereich von 15 bis 25 mm und einem Gesamtflächengewicht des Schallabsorbers im Bereich von 1 bis 2,5 kg/m², wobei das einer Schallemissionsquelle des Kraftfahrzeugs zugewandte Textilfaservlies (1) eine Schichtdicke im Bereich von 3 bis 10 mm, eine Dichte im Bereich von 50 bis 300 kg/m³, ein Flächengewicht im Bereich von 0,2 bis 2 kg/m² sowie einen Strömungswiderstand im Bereich von 70 bis 500 kNs/m4,
das der Schallemissionsquelle abgewandte Textilfaservlies (2) eine Schichtdicke im Bereich von 12 bis 20 mm, eine Dichte im Bereich von 30 bis 70 kg/m³, ein Flächengewicht im Bereich von 0,5 bis 1 kg/m² sowie einen Strömungswiderstand im Bereich von 15 bis 30 kNs/m⁴ aufweist und
das Verhältnis der Dichten des Textilfaservlieses (1) zum Textilfaservlies (2) 3 zu 1 bis 6 zu 1 beträgt.

Im relevanten Frequenzbereich von 200 bis 800 Hz ist die Gesamtenergiereduktion der erfindungsgemäßen Schallabsorber wenigstens gleich oder gegenüber einem Feder/Masse-System verbessert. Dieses üblicherweise im Kraftfahrzeugbereich eingesetzte Feder/Masse-System weist eine hohes Schallabsorptionsvermögen auf, das jedoch im Kraftfahrzeugbereich nicht notwendigerweise erforderlich ist, da der Schall sich auch über Nebenwege, wie unbehandelte Oberflächen, beispielsweise Glas weiter ausbreiten kann.

Die erfindungsgemäßen Schallabsorber weisen eine optimierte Absorption in niedrigem und mittleren Frequenzbereich auf, um eine gute akustische Performance zu geben. Dies wird erfindungsgemäß insbesondere erreicht durch die Kombination eines der Schallemissionsquelle zugewandten Textilfaservlieses 1 mit hoher Dichte und eines der Schallemissionsquelle abgewandten Textilfaservlieses 2 mit niedriger Dichte. Bevorzugterweise liegt das Textilfaservlies 2 direkt auf dem Kraftfahrzeugblech auf und bildet somit keinen Luftspalt zwischen dem Textilfaservlies 2 und dem Blech.

Textilfaservliese sind im Automobilbereich ein häufig verwendeter Konstruktionswerkstoff mit breitem Eigenschaftsspektrum. Beispielsweise wird Phenolharz-gebundenes Textilfaservlies seit langem unter anderem wegen seiner guten Dämpfungseigenschaften als Werkstoff für tragende und verkleidete Teile (rein oder als Verbundwerkstoff) in der Automobilindustrie im PKW- und LKW-Bau eingesetzt.

Phenolharz-gebundenes Textilfaservlies ist in Rohdichten von 50 bis 1000 kg/m³ bei Dicken von 5 bis 30 mm im Handel erhältlich. Es ist als sogenanntes Porenkomposit, bestehend aus drei Phasen (Baumwolle, gehärtetes Phenolharz und Luft) zu beschreiben - ein Konstruktionswerkstoff, dessen Eigenschaftsprofil in weiten Grenzen modifiziert werden kann. Baumwolle hat die Faserform, Phenolharz liegt punktförmig, linear, auch netzflächig als eine Art Matrix vor.

Durch besondere Auswahl der Vliesstoffe kann die Akustik und die Festigkeit des Verbundwerkstoffs besonders gesteuert werden. Besonders bevorzugte Materialien zur Herstellung des Vliesstoffes sind Glasfaserverstärkte oder Glasgitter-verstärkte Fasermaterialien, nämlich Bindemittel enthaltende Textilvliese, vorzugsweise solche, die aus einem Baumwollmischgewebe bestehen. Diese Vliese werden durch Pressen bei erhöhter Temperatur auf die gewünschte Festigkeit gebracht.

Die besonderen Eigenschaften und die Leistungsfähigkeit dieser letztgenannten Produktgruppe erklären sich aus der chemischen und morphologischen Struktur der Baumwolle, sowie dem Duroplastcharakter der ausgehärteten Phenolharze, die üblicherweise als Bindemittel der Baumwollmischgewebevliese eingesetzt werden. Weitere Einflussgrößen sind die Verformbarkeit, die Bügelfähigkeit der Baumwolle, die statistische Bindepunkthäufigkeit und auch die Laminat- und/oder Mantelwirkung der längs von Fasern haftenden und so auch auskondensierten Bindemittelmoleküle.

Die Baumwolle übersteht den Fertigungsprozess praktisch ohne Veränderung ihrer physikalisch-chemischen Eigenschaftsmerkmale. Sie verleiht dem Produkt besondere Qualitätsmerkmale wie Schall-Absorptionsfähigkeit, gute mechanische Festigkeitswerte, Schlagzähigkeit und Splitterfestigkeit in der Kälte.

Besonders bevorzugte Bindemittel für die Vliesstoffe sind ausgewählt aus Phenol-Formaldehyd-Harzen, Epoxidharzen, Polyesterharzen, Polyamidharzen, Polypropylen, Polyethylen und/oder Ethyl-Vinylacetat-Copolymeren. Phenolharze haben nach der Härtung die typischen Duroplasteigenschaften, die sich auf das Fertigprodukt übertragen. Das Textilfaservlies wird aus der Reißbaumwolle und dem pulvrigen Phenolharz üblicherweise auf trockenem Wege hergestellt. Die Aushärtung erfolgt entweder im Heizkanal oder über das ungehärtete Halbzeug als Zwischenstufe in der Presse. Für die Teile, die im Fahrzeugraum Verwendung finden sollen, wird ausgewähltes Textil eingesetzt.

In einer besonderen Ausführungsform der vorliegenden Erfindung umfasst das Basismaterial der Vliese Polypropylen (PP), Polyethylen (PE), Polyethylenterephthalat (PET) und/oder Polyamid (PA) im Wesentlichen in Faserform. Alternativ dazu ist es selbstverständlich auch möglich, dass man anstelle der synthetischen Fasern auch Pflanzenfasern einsetzt. Gegebenenfalls können naturgemäß auch Gemische aus Naturfasern und Synthetikfasern eingesetzt werden.

Textilfaservliese im Sinne der vorliegenden Erfindung enthalten vorzugsweise Naturfasern, insbesondere Baumwolle, Flachs, Jute, Leinen, aber auch Kunstfasern wie Polybutylenterephthalate, Polyethylenterephthalate, Nylon 6, Nylon 66, Nylon 12, Viskose oder Rayon als Textilfaser, gegebenenfalls neben üblichen Bindemitteln.

Die Art und Menge der einzusetzenden Bindemittel wird im wesentlichen durch den Anwendungszweck der Textilfaservliese bestimmt. So wird im allgemeinen der Einsatz von 5 bis 50 Gew.-%, insbesondere 20 bis 40 Gew.-% des Bindemittels, bezogen auf das Textilfaservlies 1 und/oder des Textilfaservlies 2 bevorzugt.

Gegebenenfalls können die Textilfaservliese 1 und/oder 2 eine rasterförmige Profilierung, insbesondere an der Grenzfläche der beiden Schichten aufweisen. Die Profilierung wird vorzugsweise von einer Seite aus vorgenommen; sie kann beispielsweise aus konvexen Ausbuchtungen auf der einen Seite bestehen, die als Kegel oder Pyramiden dargestellt sind. Durch material- und kostensparende "Noppenschneidtechnik" können über ein Hohlkammerprinzip hervorragend gut akustische Werte erzielt werden.

Besonders bevorzugt im Sinne der vorliegenden Erfindung sind Schallabsorber, die dadurch gekennzeichnet sind, dass das der Schallemissionsquelle zugewandte Textilfaservlies 1 eine Schichtdicke im Bereich von 3 bis 7 mm, eine Dichte im Bereich von 50 bis 300 kg/m³, ein Flächengewicht im Bereich von 0,25 bis 1,5 kg/m² sowie einen Strömungswiderstand im Bereich von 70 bis 500 kNs/m⁴ aufweist.

In gleicher Weise sind Schallabsorber im Sinne der vorliegenden Erfindung besonders bevorzugt, wenn das der Schallemissionsquelle abgewandte Textilfaservlies 2 eine Schichtdicke im Bereich von 12 bis 18 mm, eine Dichte im Bereich von 30 bis 70 kg/m³, ein Flächengewicht im Bereich von 0,6 bis 0,8 kg/m² sowie einen Strömungswiderstand im Bereich von 15 bis 30 kNs/m⁴ aufweist.

Im Automobilsektor insbesondere ist die Verwendung möglichst leichter und dünner Schallabsorber besonders bevorzugt. Dementsprechend sind Schallabsorber im Sinne der vorliegenden Erfindung besonders bevorzugt, wenn die Gesamtdicke des Schallabsorbers im Bereich von 15 bis 25 mm und das Gesamtflächengewicht des Schallabsorbers im Bereich von 1 bis 2,5 kg/m² beträgt.

Das Verhältnis der Schichtdicken des Textilfaservlieses 1 zum Textilfaservlies 2 beeinflusst wesentlich die Schallabsorptionsqualitäten.

Für den Fall, dass das Verhältnis der Schichtdicken des Textilfaservlieses 1 zum Textilfaservlies 2 im Bereich von 2 zu 1 bis 5 zu 1, insbesondere 3 zu 1 bis 4 zu 1 liegt, findet sich eine optimierte Performance mit einer ausgezeichneten Schallabsorption nicht nur im Bereich von 200 bis 800 Hz, sondern auch im höherfrequenten Bereich von 1000 bis 10.000 Hz.

Eine ähnliche Optimierung wurde im Sinne der vorliegende Erfindung gefunden, wenn das Verhältnis der Dichten des Textilfaservlieses 1 zum Textilfaservlies 2 im Bereich von 3 zu 1 bis 6 zu 1, insbesondere 4 zu 1 bis 5 zu 1 liegt.

Die erfindungsgemäßen Schallabsorber werden wie üblich durch einen Wärmeumformprozess hergestellt, so dass an sich im Stand der Technik bekannte Werkzeuge und Produktionseinrichtungen bei einer gegebenen Materialumstellung weiterhin verwendet werden können. Insbesondere im Sinne der vorliegenden Erfindung werden die Schallabsorber dadurch hergestellt, dass man die duroplastisch und/oder thermoplastisch gebundenem Textilfaservliese 1,2 unter Einwirkung des Binders verpresst und verklebt.

Besonders bevorzugt im Sinne der vorliegenden Erfindung ist ein Verfahren zur Herstellung von Schallabsorbern wie oben efiniert, das dadurch gekennzeichnet ist, dass man
a) ein erstes Grundmaterial aus textilem Fasermaterial und thermoplastischem und/oder duroplastischem Bindemittel zur Ausbildung des Textilfaservlieses (1) in eine Pressform gegebenenfalls partiell einflockt,
b) das gemäß Schritt a) eingeflockte Grundmaterial durch Erwärmung und/oder Druck vorverdichtet,
c) ein zweites Grundmaterial aus textilem Fasermaterial und thermoplastischem und/oder duroplastischem Bindemittel zur Ausbildung des Textilfaservlieses (2) auf das erste Grundmaterial in der Pressform gegebenenfalls partiell einflockt,
d) den unverdichteten Schallabsorber durch Einwirkung von Wärme und Druck verdichtet und
e) auf Raumtemperatur abkühlt.

Eine weitere Alternative zu dem vorgenannten Herstellungsverfahren der erfindungsgemäßen Schallabsorber besteht darin, dass man
a) ein erstes Grundmaterial aus textilem Fasermaterial und thermoplastischem und/oder duroplastischem Bindemittel zur Ausbildung des Textilfaservlieses 1 in eine Pressform gegebenenfalls partiell einflockt,
b) das unverdichtete Textilfaservlies 1 unter Einwirkung von Wärme und Druck vorverdichtet,
c) ein zweites Grundmaterial aus textilem Fasermaterial und thermoplastischem und/oder duroplastischem Bindemittel zur Ausbildung des Textilfaservlieses 2 in eine Pressform gegebenenfalls partiell einflockt,
d) das Textilfaservlies 2 unter Einwirkung von Wärme und Druck vorverdichtet,
e) die Textilfaservliese 1,2 aufeinanderlegt und das Textilfaservlies 2 auf das Textilfaservlies 1 aufnadelt.

Eine weitere Variante zur Herstellung der erfindungsgemäßen Schallabsorber besteht beispielsweise darin, dass man
a) ein erstes Grundmaterial aus textilem Fasermaterial und thermoplastischem und/oder duroplastischem Bindemittel zur Ausbildung des Textilfaservlieses 1 in eine Pressform gegebenenfalls partiell einflockt,
b) das unverdichtete Textilfaservlies 1 unter Einwirkung von Wärme und Druck vorverdichtet,
c) ein zweites Grundmaterial aus textilem Fasermaterial und thermoplastischem und/oder duroplastischem Bindemittel zur Ausbildung des Textilfaservlieses 2 in eine Pressform gegebenenfalls partiell einflockt,
d) das Textilfaservlies 2 unter Einwirkung von Wärme und Druck vorverdichtet,
e) die Textilfaservliese 1,2 aufeinanderlegt und mit unterschiedlichen Nadeln miteinander vernadelt.

Die erfindungsgemäßen Schallabsorber können beispielsweise in Verkehrsmitteln, insbesondere Kraftfahrzeugen, Flugzeugen, Schiffen und Eisenbahnwagen sowie in Immobilien im Innen- und Außenbereich insbesondere als Unterbelag von Fußbodenbelägen, beispielsweise aber auch als Unterbelag von Sportflächen wie Tennisplätzen eingesetzt werden.

Besonders bevorzugt im Sinne der vorliegenden Erfindung werden die Schallabsorber der vorliegenden Erfindung eingesetzt als Motorhaubenisolation, Stirnwandisolation außen, Stirnwandverkleidung innen, textile Radlaufschale und Unterschild im Motorraum; als Bodenisolation vorne, Bodenisolation Mitte, Bodenbelag, Dachhimmel, Stirnwandisolation oben, Seitenverkleidung und Sitzmuldenisolation im Fahrgastraum oder als textile Radlaufschale, Kofferraumbodenverkleidung, Hutablage, Kofferraumdeckelverkleidung und Kofferraumseitenverkleidung im Kofferraum.

### Ausführungsbeispiele:

Die nachfolgende Tabelle gibt die Daten von erfindungsgemäßen Beispielen 1 bis 5 sowie einem Referenzbeispiel wieder. In der Fig. ist die Schallabsorption in Abhängigkeit von der Frequenz der einzelnen Beispiele dargestellt. Der Strömungswiderstand der Ausführungsbeispiele wurde bestimmt nach DIN.

**Tabelle:**

| Referenz-Beispiel | | Schichtdicke [mm] | Dichte [kg/m³] | Flächengewicht [kg/m²] | Strömungswiderstand [kNs/m⁴] |
|---|---|---|---|---|---|
| Schallzugewandte Seite | Vlies 1 | 5 | 50 | 0,25 | 20 |
| Schallabgewandte Seite | Vlies 2 | 15 | 50 | 0,75 | 20 |
| | Gesamt: | 20 | | 1 | |
| Beispiel 1 | | | | | |
| Schallzugewandte Seite | Vlies 1 | 5 | 100 | 0,5 | 74 |
| Schallabgewandte Seite | Vlies 2 | 15 | 50 | 0,75 | 20 |
| | Gesamt: | 20 | | 1,25 | |
| Beispiel 2 | | | | | |
| Schallzugewandte Seite | Vlies 1 | 5 | 150 | 0,75 | 120 |
| Schallabgewandte Seite | Vlies 2 | 15 | 50 | 0,75 | 20 |
| | Gesamt: | 20 | | 1,5 | |
| Beispiel 3 | | | | | |
| Schallzugewandte Seite | Vlies 1 | 5 | 200 | 1 | 250 |
| Schallabgewandte Seite | Vlies 2 | 15 | 50 | 0,75 | 20 |
| | Gesamt: | 20 | | 1,75 | |
| Beispiel 4 | | | | | |
| Schallzugewandte Seite | Vlies 1 | 5 | 250 | 1,25 | 350 |
| Schallabgewandte Seite | Vlies 2 | 15 | 50 | 0,75 | 20 |
| | Gesamt | 20 | | 2 | |
| Beispiel 5 | | | | | |
| Schallzugewandte Seite | Vlies 1 | 5 | 300 | 1,5 | 500 |
| Schallabgewandte Seite | Vlies 2 | 15 | 50 | 0,75 | 20 |
| | Gesamt: | 20 | | 2,25 | |

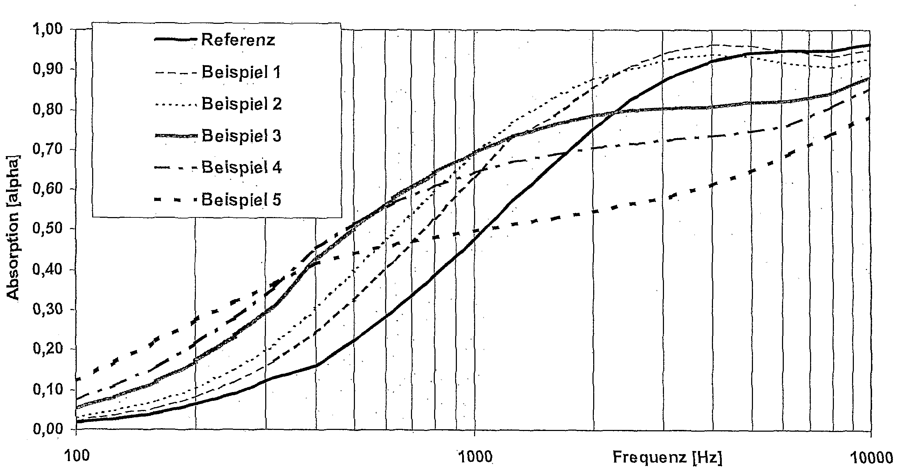

## Patentansprüche

1. Schallabsorber für ein Kraftfahrzeug bestehend aus zwei miteinander verbundenen thermoplastisch und/oder duroplastisch gebundenen Textilfaservliesen (1,2), mit einer Gesamtdicke des Schallabsorbers im Bereich von 15 bis 25 mm und einem Gesamtflächengewicht des Schallabsorbers im Bereich von 1 bis 2,5 kg/m², wobei
das einer Schallemissionsquelle des Kraftfahrzeugs zugewandte Textilfaservlies (1) eine Schichtdicke im Bereich von 3 bis 10 mm, eine Dichte im Bereich von 50 bis 300 kg/m³, ein Flächengewicht im Bereich von 0,2 bis 2 kg/m² sowie einen Strömungswiderstand im Bereich von 70 bis 500 kNs/m⁴,
das der Schallemissionsquelle abgewandte Textilfaservlies (2) eine Schichtdicke im Bereich von 12 bis 20 mm, eine Dichte im Bereich von 30 bis 70 kg/m³, ein Flächengewicht im Bereich von 0,5 bis 1 kg/m² sowie einen Strömungswiderstand im Bereich von 15 bis 30 kNs/m⁴
aufweist und
das Verhältnis der Dichten des Textilfaservlieses (1) zum Textilfaservlies (2) 3 zu 1 bis 6 zu 1 beträgt.

2. Schallabsorber nach Anspruch 1, **dadurch gekennzeichnet, dass** das Textilfaservlies (1) und/oder das Textilfaservlies (2) Naturfasern und/oder Synthetikfasern enthält.

3. Schallabsorber nach Anspruch 1, **dadurch gekennzeichnet, dass** das Textilfaservlies (1) und/oder das Textilfaservlies (2) Pflanzenfasern enthält, die ausgewählt sind aus Samenfasern, insbesondere Baumwolle; Fruchtwandfasern, insbesondere Kapok; Bastfasern, insbesondere Leinen, Flachs, Hanf und/oder Jute sowie Hartfasern, insbesondere Sisal und/oder Kokos einschließlich deren Gemische.

4. Schallabsorber nach Anspruch 1, **dadurch gekennzeichnet, dass** das Textilfaservlies (1) und/oder das Textilfaservlies (2) Synthetikfasern enthält, die ausgewählt sind aus Polyolefinen, insbesondere Polypropylen und/oder Polyethylen; Polyestern, insbesondere Polyethylenterephthalat und/oder Polybutylenterephthalat und Polyamiden insbesondere Nylon 6, Nylon 12, Nylon 66 sowie Viskose und Rayon einschließlich deren Gemische.

5. Schallabsorber nach Anspruch 1, **dadurch gekennzeichnet, dass** es ein thermoplastisches Bindemittel ausgewählt aus Polyolefinen, insbesondere Polyethylen und/oder Polypropylen sowie Ethyl-Vinylacetat-Copolymeren enthält.

6. Schallabsorber nach Anspruch 1, **dadurch gekennzeichnet, dass** es ein duroplastisches Bindemittel ausgewählt aus Phenol-Formaldehydharzen, Epoxidharzen und/oder Polyamidharzen enthält.

7. Schallabsorber nach Anspruch 1, **dadurch gekennzeichnet, dass** es ein thermoplastisches und/oder duroplastisches Bindemittel in einer Menge von 5 bis 50 Gew. %, insbesondere 20 bis 40 Gew. % bezogen auf das Textilfaservlies (1) und/oder das Textilfaservlies (2) enthält.

8. Verfahren zur Herstellung von Schallabsorbern nach einem der Ansprüche 1 bis 7, **dadurch gekennzeichnet, dass** man
a) ein erstes Grundmaterial aus textilem Fasermaterial und thermoplastischem und/oder duroplastischem Bindemittel zur Ausbildung des Textilfaservlieses (1) in eine Pressform gegebenenfalls partiell einflockt,
b) das gemäß Schritt a) eingeflockte Grundmaterial durch Erwärmung und/oder Druck vorverdichtet,
c) ein zweites Grundmaterial aus textilem Fasermaterial und thermoplastischem und/oder duroplastischem Bindemittel zur Ausbildung des Textilfaservlieses (2) auf das erste Grundmaterial in der Pressform gegebenenfalls partiell einflockt,
d) den unverdichteten Schallabsorber durch Einwirkung von Wärme und Druck verdichtet und
e) auf Raumtemperatur abkühlt.

9. Verfahren zur Herstellung von Schallabsorbern nach einem der Ansprüche 1 bis 7, **dadurch gekennzeichnet, dass** man
a) ein erstes Grundmaterial aus textilem Fasermaterial und thermoplastischem und/oder duroplastischen Bindemittel zur Ausbildung des Textilfaservlieses (1) in eine Pressform gegebenenfalls partiell einflockt,
b) das unverdichtete Textilfaservlies (1) unter Einwirkung von Wärme und Druckvorverdichtet,
c) ein zweites Grundmaterial aus textilem Fasermaterial und thermoplastischem und/oder duroplastischem Bindemittel zur Ausbildung des Textilfaservlies (2) in eine Pressform gegebenenfalls partiell einflockt,
d) das unverdichtete Textilfaservlies (2) unter Einwirkung von Wärme und Druckvorverdichtet,
e) die Textilfaservliese (1, 2) aufeinanderlegt und unter Einwirkung von Wärme und Druck kleberfrei verbindet und verdichtet.

10. Verfahren zur Herstellung von Schallabsorbern nach einem der Ansprüche 1 bis 7, **dadurch gekennzeichnet, dass** man
a) ein erstes Grundmaterial aus textilem Fasermaterial und thermoplastischem und/oder duroplastischem Bindemittel zur Ausbildung des Textilfaservlieses (1) in eine Pressform gegebenenfalls partiell einflockt,
b) das unverdichtete Textilfaservlies (1) unter Einwirkung von Wärme und Druck vorverdichtet,
c) ein zweites Grundmaterial aus textilem Fasermaterial und thermoplastischem und/oder duroplastischem Bindemittel zur Ausbildung des Textilfaservlieses (2) in eine Pressform gegebenenfalls partiell einflockt,
d) das Textilfaservlies (2) unter Einwirkung von Wärme und Druck vorverdichtet,
e) die Textilfaservliese (1,2) aufeinanderlegt und das Textilfaservlies (2) auf das Textilfaservlies (1) aufnadelt.

11. Verfahren zur Herstellung von Schallabsorbern nach einem der Ansprüche 1 bis 7, **dadurch gekennzeichnet, dass** man
a) ein erstes Grundmaterial aus textilem Fasermaterial und thermoplastischem und/oder duroplastischem Bindemittel zur Ausbildung des Textilfaservlieses (1) in eine Pressform gegebenenfalls partiell einflockt,
b) das unverdichtete Textilfaservlies (1) unter Einwirkung von Wärme und Druck vorverdichtet,
c) ein zweites Grundmaterial aus textilem Fasermaterial und thermoplastischem und/oder duroplastischem Bindemittel zur Ausbildung des Textilfaservlieses (2) in eine Pressform gegebenenfalls partiell einflockt,
d) das Textilfaservlies (2) unter Einwirkung von Wärme und Druck vorverdichtet,
e) die Textilfaservliese (1,2) aufeinanderlegt und mit unterschiedlichen Nadeln miteinander vernadelt.

12. Verwendung eines Schallabsorbers nach einem der Ansprüche 1 bis 7 als Motorhaubenisolation, Stirnwandisolation außen, Stirnwandverkleidung innen, textile Radlaufschale und Unterschild im Motorraum; als Bodenisolation vorne, Bodenisolation Mitte, Bodenbelag, Dachhimmel, Stirnwandisolation oben, Seitenverkleidung und Sitzmuldenisolation im Fahrgastraum oder als textile Radlaufschale, Kofferraumbodenverkleidung, Hutablage, Kofferraumdeckelverkleidung und Kofferraumseitenverkleidung im Kofferraum.

## Claims

1. A sound absorber for a motor vehicle, consisting of two interconnected non-woven fabrics (1,2) bonded through thermoplastic and/or thermoset materials and having a total thickness of the sound absorber within a range of from 15 to 25 mm and a total weight per surface area of the sound absorber within a range of from 1 to 2,5 kg/m², wherein the non-woven fabric (1) facing towards the sound-emitting source of the motor vehicle has a layer thickness within a range of from 3 to 10 mm, a density within a range of from 50 to 300 kg/m³, a weight per surface area within a range of from 0.2 to 2 kg/m², and a flow resistance within a range of from 70 to 500 kNs/m⁴, and the non-woven fabric (2) facing away from the sound-emitting source has a layer thickness within a range of from 12 to 20 mm, a density within a range of from 30 to 70 kg/m³, a weight per surface area within a range of from 0.5 to 1 kg/m², and a flow resistance within a range of from 15 to 30 kNs/m⁴, and the ratio of the densities of the non-woven fabric (1) to the non-woven fabric (2) is from 3:1 to 6:1.

2. The sound absorber according to claim 1, **characterized in that** said non-woven fabric (1) and/or said non-woven fabric (2) contains natural fibers and/or synthetic fibers.

3. The sound absorber according to claim 1, **characterized in that** said non-woven fabric (1) and/or said non-woven fabric (2) contains vegetable fibers selected from seed fibers, especially cotton; fruit wall fibers, especially kapok; bast fibers, especially linen, flax, hemp and/or jute; as well as hard fibers, especially sisal and/or coco including their mixtures.

4. The sound absorber according to claim 1, **characterized in that** said non-woven fabric (1) and/or said non-woven fabric (2) contains synthetic fibers selected from polyolefins, especially polypropylene and/or polyethylene; polyesters, especially polyethylene terephthalate and/or polybutylene terephthalate; and polyamides, especially nylon 6, nylon 12, nylon 66; as well as viscose and rayon including their mixtures.

5. The sound absorber according to claim 1, **characterized by** containing a thermoplastic binder selected from polyolefins, especially polyethylene and/or polypropylene, as well as ethyl/vinyl acetate copolymers.

6. The sound absorber according to claim 1, **characterized by** containing a thermoset binder selected from phenol-formaldehyde resins, epoxy resins and/or polyamide resins.

7. The sound absorber according to claim 1, **characterized by** containing a thermoplastic and/or thermoset binder in an amount of from 5 to 50% by weight, especially from 20 to 40% by weight, based on said non-woven fabric (1) and/or said non-woven fabric (2).

8. A method for the preparation of sound absorbers according to any of claims 1 to 7, **characterized by**:
a) pasting a first base material consisting of a textile fiber material and a thermoplastic and/or thermosetting binder into a mold, optionally partially, to form the non-woven fabric (1);
b) predensifying the base material pasted according to step a) by heating and/or pressure;
c) pasting a second base material consisting of a textile fiber material and a thermoplastic and/or thermosetting binder, optionally partially, onto the first base material in the mold to form the non-woven fabric (2);
d) densifying the undensified sound absorber by the action of heat and pressure; and
e) cooling down to room temperature.

9. A method for the preparation of sound absorbers according to any of claims 1 to 7, **characterized by**:
a) pasting a first base material consisting of a textile fiber material and a thermoplastic and/or thermosetting binder into a mold, optionally partially, to form the non-woven fabric (1);
b) predensifying the undensified non-woven fabric 1 by the action of heat and pressure;
c) pasting a second base material consisting of a textile fiber material and a thermoplastic and/or thermosetting binder into a mold, optionally partially, to form the non-woven fabric (2);
d) predensifying the undensified non-woven fabric (2) by the action of heat and pressure;
e) superimposing the non-woven fabrics (1, 2) and bonding and densifying them by the action of heat and pressure without an adhesive.

10. A method for the preparation of sound absorbers according to any of claims 1 to 7, **characterized by**:
a) pasting a first base material consisting of a textile fiber material and a thermoplastic and/or thermosetting binder into a mold, optionally partially, to form the non-woven fabric (1);
b) predensifying the undensified non-woven fabric (1) by the action of heat and pressure;
c) pasting a second base material consisting of a textile fiber material and a thermoplastic and/or thermosetting binder into a mold, optionally partially, to form the non-woven fabric (2);
d) predensifying the non-woven fabric (2) by the action of heat and pressure;
e) superimposing the non-woven fabrics (1, 2) and bonding non-woven fabric (2) to non-woven fabric (1) by needle punching.

11. A method for the preparation of sound absorbers according to any of claims 1 to 7, **characterized by**:
a) pasting a first base material consisting of a textile fiber material and a thermoplastic and/or thermosetting binder into a mold, optionally partially, to form the non-woven fabric (1);
b) predensifying the undensified non-woven fabric (1) by the action of heat and pressure;
c) pasting a second base material consisting of a textile fiber material and a thermoplastic and/or thermosetting binder into a mold, optionally partially, to form the non-woven fabric (2);
d) predensifying the non-woven fabric (2) by the action of heat and pressure;
e) superimposing the non-woven fabrics (1, 2) and bonding them together by needle punching using different needles.

12. Use of a sound absorber according to any of claims 1 to 7 as a hood insulation, exterior bulkhead insulation, interior bulkhead insulation, textile wheel arch shell and lower shield in the engine compartment; as front floor insulation, middle floor insulation, floor covering, roof liner, top bulkhead insulation, side trim and seat well insulation in the passenger compartment, or as textile wheel arch shell, trunk floor lining, rear shelf, trunk cover lining, and trunk side lining in the trunk.

## Revendications

1. Absorbeur de son pour une automobile, consistant en deux tissus non tissés (1, 2) interreliés et contenant des liants thermoplastiques et/ou thermodurcis, avec une épaisseur totale de l'absorbeur de son comprise entre 15 et 25 mm, et un grammage total de l'absorbeur de son compris entre 1 et 2,5 kg/m², dans lequel le tissu non tissé (1) orienté vers une source d'émission de son de l'automobile présente une épaisseur de couche comprise entre 3 et 10 mm, une densité comprise entre 50 et 300 kg/m³, un grammage compris entre 0,2 et 2 kg/m², et une résistance à l'écoulement comprise entre 70 et 500 kNs/m⁴, le tissu non tissé (2) opposé à la source d'émission de son présente une épaisseur de couche comprise entre 12 et 20 mm, une densité comprise entre 30 et 70 kg/m³, un grammage compris entre 0,5 et 1 kg/m², et une résistance à l'écoulement comprise entre 15 et 30 kNs/m⁴, et le rapport de la densité du tissu non tissé (1) à celle du tissu non tissé (2) est de 3 : 1 à 6 : 1.

2. Absorbeur de son selon la revendication 1, **caractérisé en ce que** ledit tissu non tissé (1) et/ou ledit tissu non tissé (2) contient des fibres naturelles et/ou des fibres synthétiques.

3. Absorbeur de son selon la revendication 1, **caractérisé en ce que** ledit tissu non tissé (1) et/ou ledit tissu non tissé (2) contient des fibres de plantes choisies parmi des fibres de semence, notamment de coton, des fibres de péricarpe, notamment de kapok, des fibres de raphia, notamment de lin, de chanvre et/ou de jute, et des fibres dures, notamment de sisal et/ou de coco, incluant leurs mélanges.

4. Absorbeur de son selon la revendication 1, **caractérisé en ce que** ledit tissu non tissé (1) et/ou ledit tissu non tissé (2) contient des fibres synthétiques choisies parmi des polyoléfines, notamment polypropylène et/ou polyéthylène, des polyesters, notamment téréphtalate de polyéthylène et/ou téréphtalate de polybutylène, et des polyamides, notamment du nylon 6, nylon 12, nylon 66, ainsi que la viscose et le rayonne, incluant leurs mélanges.

5. Absorbeur de son selon la revendication 1, **caractérisé en ce qu'**il contient un liant thermoplastique choisi parmi des polyoléfines, notamment polyéthylène et/ou polypropylène, et des copolymères acétate d'éthyle/de vinyle.

6. Absorbeur de son selon la revendication 1, **caractérisé en ce qu'**il contient un liant thermodurcissant choisi parmi les résines phénol-formaldéhyde, résines époxy, et/ou résines de polyamide.

7. Absorbeur de son selon la revendication 1, **caractérisé en ce qu'**il contient un liant thermoplastique et/ou thermodurcissant en une quantité de 5 à 50 % en poids, notamment de 20 à 40 % en poids, par rapport audit tissu non tissé (1) et/ou audit tissu non tissé (2).

8. Procédé pour préparer des absorbeurs de son selon l'une quelconque des revendications 1 à 7, **caractérisé par** les étapes consistant à :
a) appliquer des flocons d'un premier matériau de base consistant en matériau fibreux textile et liant thermoplastique et/ou thermodurcissant pour former le tissu non tissé (1) dans un moule, éventuellement partiellement,
b) pré-compacter le matériau de base appliqué sous forme de flocons selon l'étape a), par chauffage et/ou sous pression,
c) appliquer des flocons d'un second matériau de base consistant en matériau fibreux textile et liant thermoplastique et/ou thermodurcissant pour former le tissu non tissé (2) sur ledit premier matériau de base dans le moule, éventuellement partiellement,
d) compacter l'absorbeur de son non compacté par l'action de chaleur et de pression, et
e) refroidir à température ambiante.

9. Procédé pour préparer des absorbeurs de son selon l'une quelconque des revendications 1 à 7, **caractérisé par** les étapes consistant à :
a) appliquer des flocons d'un premier matériau de base consistant en matériau fibreux textile et liant thermoplastique et/ou thermodurcissant pour former le tissu non tissé (1) dans un moule, éventuellement partiellement,
b) pré-compacter le tissu non tissé (1) non compacté, par l'action de chaleur et de pression,
c) appliquer des flocons d'un second matériau de base consistant en matériau fibreux textile et liant thermoplastique et/ou thermodurcissant pour former le tissu non tissé (2) sur ledit premier matériau de base dans le moule, éventuellement partiellement,
d) pré-compacter le tissu non tissé (2) non compacté par l'action de chaleur et de pression,
e) superposer les tissus non tissés (1, 2) et coller et compacter ceux-ci, sans adhésif, par l'action de chaleur et de pression.

10. Procédé pour préparer des absorbeurs de son selon l'une quelconque des revendications 1 à 7, **caractérisé par** les étapes consistant à :
a) appliquer des flocons d'un premier matériau de base consistant en matériau fibreux textile et liant thermoplastique et/ou thermodurcissant pour former le tissu non tissé (1) dans un moule, éventuellement partiellement,
b) pré-compacter le tissu non tissé 1 non compacté, par l'action de chaleur et de pression,
c) appliquer des flocons d'un second matériau de base consistant en matériau fibreux textile et liant thermoplastique et/ou thermodurcissant pour former le tissu non tissé (2) sur ledit premier matériau de base dans le moule, éventuellement partiellement,
d) pré-compacter le tissu non tissé (2) non compacté par l'action de chaleur et de pression,
e) superposer les tissus non tissés (1, 2) et épingler ledit tissu non tissé (2) sur ledit tissu non tissé (1).

11. Procédé pour préparer des absorbeurs de son selon l'une quelconque des revendications 1 à 7, **caractérisé par** les étapes consistant à :
a) appliquer des flocons d'un premier matériau de base consistant en matériau fibreux textile et liant thermoplastique et/ou thermodurcissant pour former le tissu non tissé (1) dans un moule, éventuellement partiellement,
b) pré-compacter le tissu non tissé 1 non compacté, par l'action de chaleur et de pression,
c) appliquer des flocons d'un second matériau de base consistant en matériau fibreux textile et liant thermoplastique et/ou thermodurcissant pour former le tissu non tissé (2) sur ledit premier matériau de base dans le moule, éventuellement partiellement,
d) pré-compacter le tissu non tissé (2) non compacté par l'action de chaleur et de pression,
e) superposer les tissus non tissés (1, 2) et épingler ceux-ci ensemble avec des aiguilles différentes.

12. Utilisation d'un absorbeur de son selon l'une quelconque des revendications 1 à 7 comme isolation de capot, isolation externe de la paroi frontale, revêtement interne de la paroi frontale, coque textile de passage de roue et carénage inférieur dans le compartiment moteur, comme isolation de plancher antérieure, isolation de plancher médiale, revêtement de plancher, toit de véhicule, isolation supérieure de la paroi frontale, revêtement latéral et isolation de coque dans l'habitacle ou comme coque textile de passage de roue, revêtement de plancher du coffre, plage arrière, revêtement de couvercle de coffre, et revêtement latéral de coffre dans le coffre.
